(19) Europäisches Patentamt / European Patent Office / Office européen des brevets

(11) **EP 3 115 280 B1**

(12) **FASCICULE DE BREVET EUROPEEN**

(45) Date de publication et mention de la délivrance du brevet:
**18.04.2018 Bulletin 2018/16**

(51) Int Cl.:
**B62D 15/02** (2006.01)    **G05D 1/02** (2006.01)
**G06T 7/20** (2017.01)    **B62D 13/00** (2006.01)
**B60W 30/06** (2006.01)

(21) Numéro de dépôt: **16174546.8**

(22) Date de dépôt: **15.06.2016**

(54) **PROCÉDÉ DE CONDUITE AUTOMATIQUE POUR L'INSERTION ET L'EXTRACTION D'UN VÉHICULE DANS UNE STATION D'ACCUEIL, ET DISPOSITIF DE CONTRÔLE METTANT EN OEUVRE UN TEL PROCÉDÉ**

AUTOMATISCHES STEUERUNGSVERFAHREN FÜR DAS EIN- UND AUSFAHREN EINES FAHRZEUGS IN EINE AUFNAHMESTATION, UND STEUERUNGSVORRICHTUNG FÜR DIE UMSETZUNG DIESES VERFAHRENS

AUTOMATIC DRIVING METHOD FOR INSERTING AND REMOVING A VEHICLE IN A DOCKING STATION, AND MONITORING DEVICE IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2015 FR 1501414**

(43) Date de publication de la demande:
**11.01.2017 Bulletin 2017/02**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **LUCET, Eric**
  **75014 PARIS (FR)**
• **MICAELLI, Alain**
  **92260 FONTENAY-AUX-ROSES (FR)**
• **RUSSOTTO, François-Xavier**
  **92190 MEUDON (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 2 181 898     DE-A1- 10 350 923**
**US-A1- 2006 111 820**

**Description**

La présente invention concerne un procédé de conduite automatique pour l'insertion et/ou l'extraction d'un véhicule dans une station d'accueil. Elle concerne également un dispositif de contrôle mettant en oeuvre un tel procédé. Elle s'applique notamment pour l'insertion, ou l'extraction, de camions porte containers dans des stations d'accueil dédiées à la pose et à la dépose de containers.

Le trafic intra-portuaire consiste à déplacer des containers entre les points de chargement/déchargement des cargos et les zones de stockage temporaire (relié aux infrastructures de transports routières et ferroviaires). Les phases de chargement/déchargement sont opérées à l'aide de moyens de levage mobiles (grues) qui vont charger/décharger des plateformes mobiles qui vont réaliser le transport entre les différents points du port. La précision du positionnement de la plateforme mobile lors de son stationnement est cruciale pour sécuriser et accélérer la tâche de chargement/déchargement.

En effet, les opérations de parking d'une plateforme ou remorque, véhiculée au moyen d'une cabine motorisée, sont délicates et demandent beaucoup de temps, même lorsqu'elles sont effectuées par des chauffeurs expérimentés. Des accidents peuvent par ailleurs survenir, portant atteinte aux matériels contenus dans les containers mais aussi aux personnes impliquées dans les manoeuvres alentour. Pour augmenter la productivité et la sécurité du trafic portuaire, il faut donc accélérer les opérations de parking et diminuer de façon importante le nombre d'accidents. Pour diminuer ces accidents, il faut charger et décharger les containers avec précision, ce qui exige de positionner précisément les plateformes dans les places de parking.

Pour améliorer la précision et sécuriser les opérations de chargement et de déchargement de containers sur des plateformes, il existe des stations de parking équipées de parois latérales. Le problème est alors de parquer rapidement une plateforme, remorque ou véhicule long, dans une aire de stationnement à quelques centimètres près, voire au centimètre près. Une aide au parking ou un parking automatique est à cet effet nécessaire.

Un exemple d'application est de parvenir à faire s'insérer automatiquement un véhicule long de 13 mètres et large de 3 mètres, portant une charge utile de l'ordre de 60 tonnes, dans une place de parking avec une précision de positionnement de l'ordre du centimètre à partir d'une position de départ distante d'une quinzaine de mètres ou plus de la place de parking, lieu de stationnement.

Plusieurs solutions d'aide au parking plus ou moins automatisées sont connues, mais elles présentent des inconvénients ou sont insatisfaisantes, ou ne peuvent répondre au problème posé.

Dans le document EP 2 352 690 B1, il s'agit du même contexte avec le même type de véhicule, avec les mêmes types de zones de déplacement et de parking. Néanmoins, la conduite du véhicule est totalement manuelle et aucune exigence de déplacement précis n'est mentionnée.

Dans le document US 8,862,321 B2 un véhicule est guidé le long d'un chemin cible initiale en commandant un actionneur de direction jusqu'à ce que le véhicule se trouve dans une position désirée particulière pour un parking parallèle. Néanmoins, le véhicule considéré est différent de celui traité par la présente invention, il n'a pas les mêmes dimensions ni la même cinématique. La trajectoire et la position désirée sont différentes. Cette approche ne satisfait pas les exigences de précision.

Le document DE10201 2023999 A1 pose le problème de la navigation autonome d'un véhicule en milieu extérieur où la navigation d'un camion porte container en milieu portuaire fait partie des contextes applicatifs possibles. Cependant, la solution décrite dans ce document n'est pas adaptée à des cinématiques de déplacement complexes. Elle propose des marqueurs fixés dans l'environnement qui indiquent le chemin à suivre avec des capteurs sur le véhicule qui repèrent ces marqueurs. Elle a notamment l'inconvénient d'exiger des marqueurs sur le parcours du véhicule, ce qui complexifie la mise en oeuvre.

Un document US 2006/0111820 A1 décrit un système de contrôle d'un véhicule, mettant en oeuvre le procédé de conduite automatique correspondant pour l'insertion d'un véhicule dans une station d'accueil et/ ou d'extraction de ladite station vers une position cible, ledit véhicule étant soumis à des glissements latéraux et/ou longitudinaux des roues avant et des roues arrière lors de ses déplacements, comportant les phases suivantes : - une phase préliminaire dans laquelle ledit véhicule est aligné pour s'engager vers ladite position cible; - une première phase dans laquelle on génère une trajectoire à suivre, dite de référence, en fonction de l'état du véhicule et de la position cible, ledit état étant défini par la position courante et l'orientation du véhicule; - une deuxième phase dans laquelle, ladite trajectoire de référence est découpée en tronçons; - dans une troisième phase, on commande l'angle de braquage desdites roues et la vitesse linéaire de traction du véhicule en fonction de l'état du véhicule, pour rallier les centres desdites roues sur la trajectoire de référence. Un but de l'invention est notamment de permettre le stationnement d'un véhicule dans une station d'accueil, rapide et précis. A cet effet, l'invention a pour objet procédé de conduite automatique pour l'insertion d'un véhicule dans une station d'accueil et/ou d'extraction de ladite station vers une position cible, ledit véhicule étant soumis à des glissements latéraux et/ou longitudinaux des roues avant et des roues arrière lors de ses déplacements, ledit procédé comportant les phases suivantes :

- une phase préliminaire dans laquelle ledit véhicule est aligné pour s'engager vers ladite position cible ;
- une première phase dans laquelle on génère une trajectoire à suivre, dite de référence, en fonction de l'état du véhicule et de la position cible, ledit état étant défini par la position courante et l'orientation du véhicule ;
- une deuxième phase dans laquelle, ladite trajectoire de référence étant découpée en tronçons, on prédit au départ de chaque tronçon et avant que le véhicule engage un mouvement si ladite trajectoire de référence peut être suivie en fonction de contraintes d'encombrement imposées et des glissements latéraux et/ou longitudinaux estimés ;
- dans une troisième phase, si ladite trajectoire peut être suivie, on commande l'angle de braquage desdites roues et la vitesse linéaire de traction du véhicule en fonction de l'état du véhicule et des glissements latéraux et/ou longitudinaux, pour rallier les centres desdites roues sur la trajectoire de référence ;

si la trajectoire ne peut être suivie, on effectue un nouvel alignement du véhicule vers la position cible et on génère une nouvelle trajectoire de référence selon la première phase.

Dans une mise en oeuvre particulière, on définit plusieurs zones géographiques entre la position initiale du véhicule et la position cible dans lesquelles lesdites contraintes imposées sont de plus en plus sévères en s'approchant de ladite station d'accueil.

La loi de commande des angles de braquage $\beta_f$, $\beta_r$ des roues avant et arrière est par exemple obtenue selon un processus d'optimisation d'une fonction sous contrainte où la variable est un vecteur u composé des dérivés par rapport à la distance $\beta'_f$, $\beta'_r$ des angles de braquage, indépendamment du temps.

Avantageusement, la loi de commande est par exemple basée sur un modèle cinématique dudit véhicule tenant compte de l'écart $d_f$, $d_r$ entre l'axe des roues et l'axe de direction à l'avant et à l'arrière dudit véhicule.

Un vecteur u est par exemple calculé pour chaque tronçon de ladite trajectoire.

Les contraintes sont par exemple fonction desdites contraintes imposées dépendant de l'encombrement dudit véhicule.

L'état dudit véhicule et les glissements sont par exemple issus d'une observation de variables indépendantes de ladite trajectoire, lesdites variables étant :

- les vitesses de rotation moyennes $\omega_f$ et $\omega_r$ des roues avant et arrière ;
- les angles de direction desdites roues avant et arrière $\alpha_f$, $\alpha_r$ ;
- les dérivées par rapport au temps $\dot{\alpha}_f$, $\dot{\alpha}_r$ desdits angles ;
- la position $(x_m, y_m)$ et l'angle $(\theta_m)$ d'un repère mobile (m) lié audit véhicule par rapport à un repère fixe (o).

Le véhicule est par exemple un porte containers, la station d'accueil étant destinée au chargement et au déchargement de containers, ledit porte container ayant des mouvements d'élévation provoquant un écart $d_f$, $d_r$ entre l'axe des roues et l'axe de direction à l'avant et à l'arrière.

L'invention concerne également un dispositif de contrôle de la conduite automatique pour l'insertion d'un véhicule dans une station d'accueil et/ou d'extraction de ladite station vers une position cible, ledit véhicule étant soumis à des glissements latéraux et/ou longitudinaux des roues avant et des roues arrière lors de ces déplacements, ledit dispositif étant apte à être embarqué dans ledit véhicule et à être relié au moins, via des interfaces appropriées, à des capteurs proprioceptifs, des capteur extéroceptifs et des moteurs d'actionnement de la direction et de la traction dudit véhicule, et comportant un calculateur mettant en oeuvre le procédé tel que décrit précédemment.

D'autres caractéristiques et avantages de l'invention apparaîtront à l'aide de la description qui suit, faite en regard de dessins annexés qui représentent :

- Les figures 1a et 1b, un exemple d'application de l'invention ;
- Les figures 2a et 2b, des vues plus précises de l'application en montrant respectivement un véhicule en stationnement dans une station d'accueil et s'engageant dans la station ;
- La figure 3, le véhicule en phase d'approche :
- La figure 4, par une vue partielle, une particularité d'un véhicule auquel s'applique l'invention ;
- La figure 5, une architecture fonctionnelle du contrôle d'un véhicule, selon l'invention ;
- La figure 6, des phases du procédé selon l'invention ;
- La figure 7, une illustration de zones géographiques définies auxquelles correspondent des contraintes imposées au véhicule ;
- La figure 8, un exemple de modèle cinématique utilisé par l'invention.

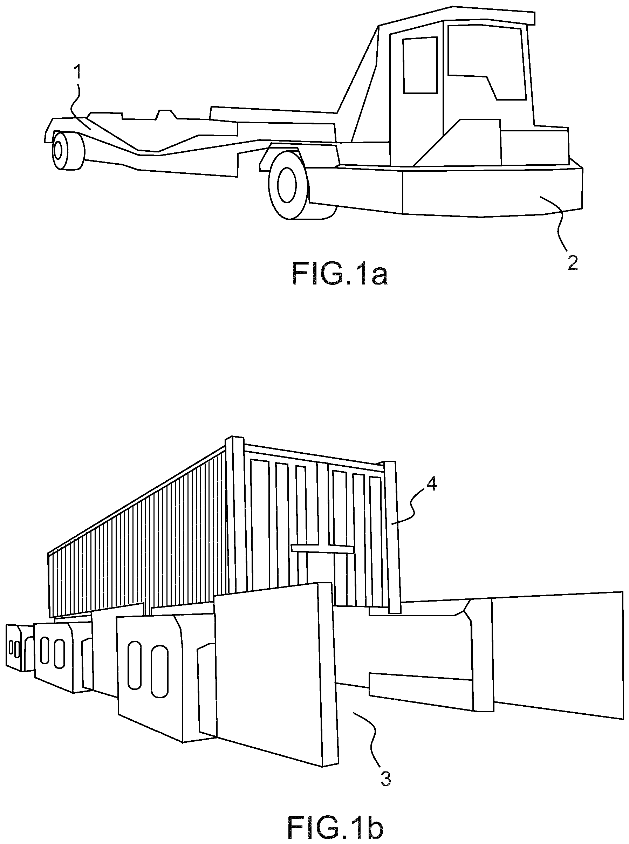

Les figures 1 a et 1b présentent un exemple d'application de l'invention pour un porte container. La figure 1 a présente une plateforme mobile 1 remorquée ou poussée par une cabine 2 motorisée. Dans l'exemple de la figure 1a, la remorque 1 mesure par exemple 13 mètres de long et 3 mètres de large. Elle est utilisée dans le trafic portuaire pour être chargée d'un container dont le poids atteint plusieurs dizaines de tonnes.

La figure 1b présente une station de parking 3 destinée à accueillir la remorque 1. La station de parking sera décrite plus en détail par la suite. Dans l'exemple de la figure 1, elle supporte un container 4 prêt à être chargé sur la remorque 3 lorsque celle-ci sera en stationnement dans la station 3. L'invention est présentée avec un exemple d'aire de stationnement particulier 3. Elle s'applique bien sûr pour d'autres types d'aires de stationnement. Plus généralement elle s'applique également pour l'aide au parking précis, notamment de véhicules long, en dehors du trafic portuaire.

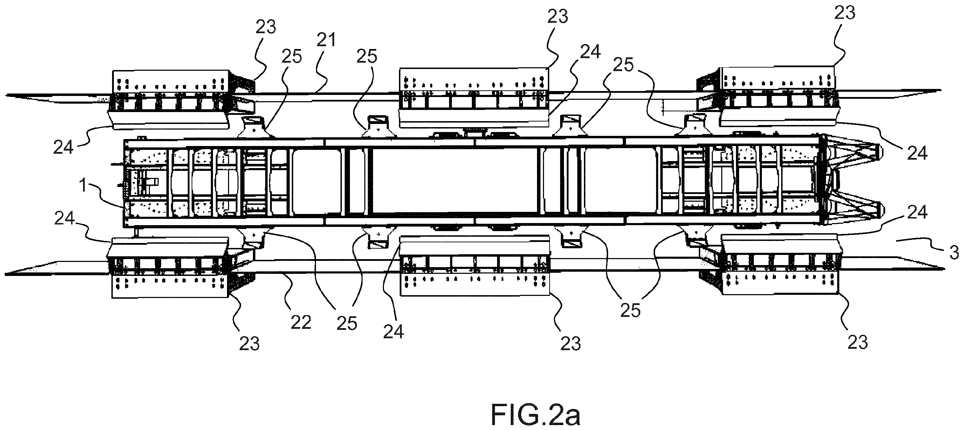

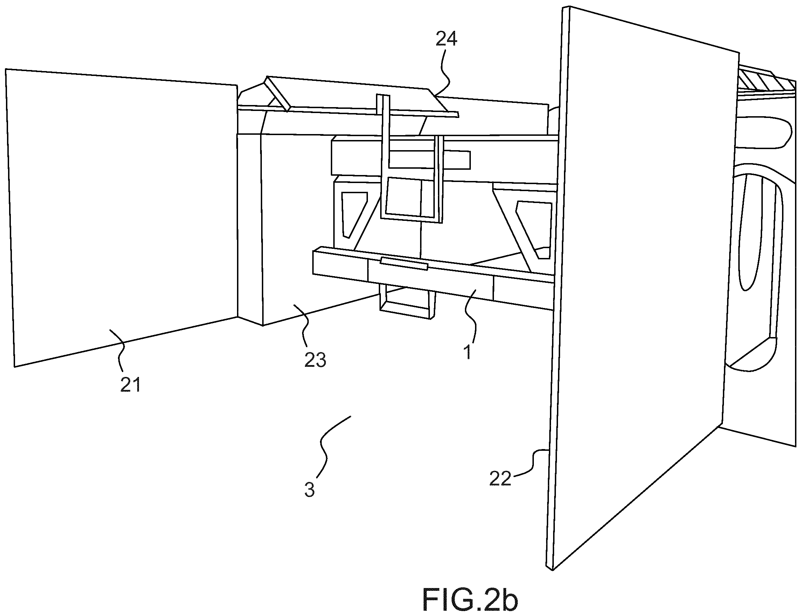

Les figures 2a et 2b précisent l'exemple particulier d'application de l'invention évoqué aux figures 1a et 1b. La figure 2a présente par une vue de dessus la remorque 1 en stationnement dans la station de parking 3, station que l'on pourra appeler par la suite station de chargement, signifiant que la remorque est chargée ou déchargée de son container dans cette station.

La figure 2b présente par une vue en perspective partielle, la remorque 1 pénétrant dans la station 3. Cette station comporte deux parois latérales 21, 22 en forme de créneaux. Les créneaux correspondent à des poteaux 23 surmontés de support 24, en sailli vers l'intérieur des parois. Ces supports 24 sont destinés à porter ensemble un container, l'ensemble des supports formant une surface d'accueil. Dans l'exemple de la figure 2a, trois poteaux 23 sont disposés de chaque côté.

La remorque 1 comporte une série de supports 25, en saillie vers l'extérieur, disposés latéralement de chaque côté. En stationnement, comme illustré par

la figure 2a, les supports 25 de la remorque sont disposés entre les poteaux. La remorque est alors prête à être chargée. Le chargement d'un container 4 sur la remorque 1 se passe de la façon suivante :

- La remorque est mise de façon adéquat en stationnement comme illustré sur la figure 2a ;
- Le container 4 est posé sur les supports 24 de la station comme illustré par la figure 1b ;
- Les supports 25 de la remorque étant fixés sur une structure qui se soulève, les supports sont levés avec la structure pour atteindre le dessous du container, puis encore levés pour dépasser le niveau des supports 24 de la station, le container étant alors porté par les supports 25 seuls de la remorque ;
- Lorsque les supports 25 de la remorque ont atteint un niveau donné, la remorque 1 peut être retirée de la station, chargée par le container, les supports 25 portant le container passant alors au-dessus des supports 24 de la station.

Pour le déchargement du container, on effectue les étapes dans l'ordre inverse.

Les étapes précédentes montrent que la remorque 1 doit être placée avec précision dans la station de chargement 3, notamment en regard des parois latérales 21, 22. La précision attendue peut être de l'ordre du centimètre, voire moins. A cette exigence de précision, s'ajoute une contrainte de temps, la remorque devant être garée rapidement dans la station 3.

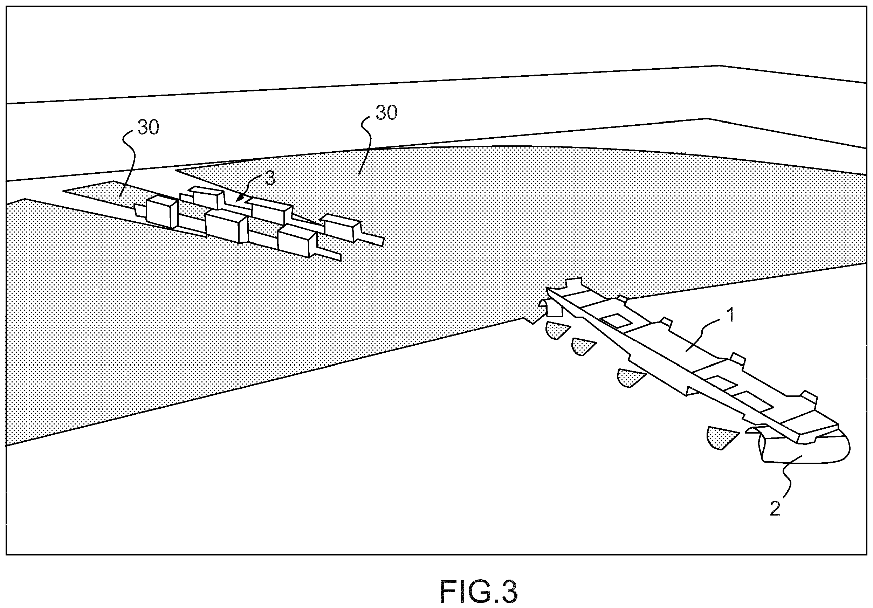

La figure 3 illustre le véhicule 1 en phase d'approche vers la station d'accueil 3. Au départ le véhicule est stationné dans une zone définie par rapport à la station d'accueil, celle-ci étant couverte par le faisceau de détection 30 d'un capteur placé sur le véhicule, à l'arrière par exemple si le véhicule se gare en marche arrière. Le véhicule se déplace le long d'un chemin de référence en commandant des actionneurs de direction et de traction jusqu'à ce qu'il se situe dans une position cible par rapport à la station d'accueil.

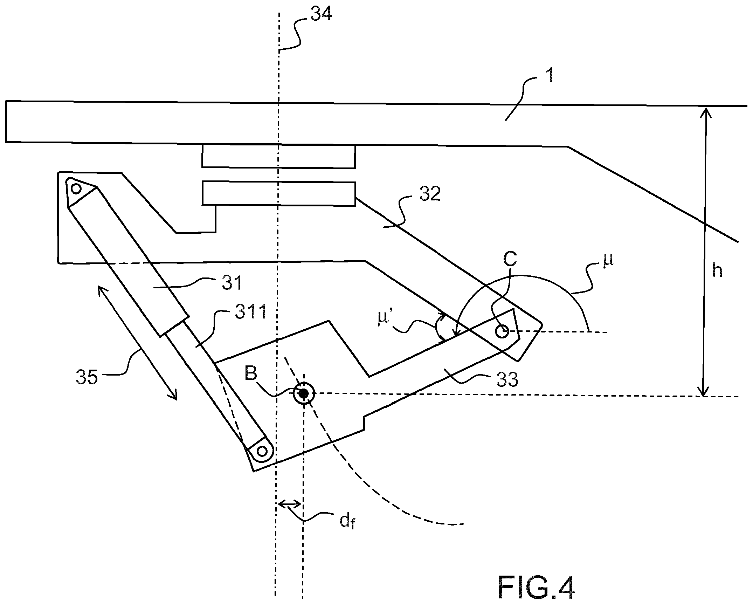

La figure 4 présente par une vue partielle une particularité de la cinématique d'un véhicule 1 porte container utilisé dans le contexte précédemment décrit. Plus particulièrement, la figure 3 décrit le système d'élévation qui permet de soulever les supports 25 pour poser ou déposer les containers sur les supports 24 de la station. L'élévation est réalisée au moyen d'un vérin 31 couplé à une pièce mécanique 32 fixe par rapport à la remorque 1. Une extrémité du vérin est solidaire mécaniquement de cette pièce selon un degré de rotation. Le vérin est également couplé à une pièce mécanique 33 mobile en rotation autour de l'axe des roues, repéré par un point B. L'autre extrémité du vérin est liée mécaniquement à une extrémité de cette pièce mobile selon un degré de liberté. L'autre extrémité de la pièce mobile 33 est liée mécaniquement à la pièce fixe 32 également selon un degré de liberté. Tous ces composants mécaniques 31, 32, 33 sont mobiles en rotation dans le plan perpendiculaire à l'axe des roues, c'est-à-dire dans le plan vertical. L'élévation est commandée par la course 35 du piston 311 du vérin, ce déplacement étant piloté par un dispositif de commande non représenté. La course du piston en extension provoque un basculement de la pièce mobile 33 par rapport à l'axe B entraînant l'augmentation de l'angle $\mu'$ entre la pièce fixe 32 et la pièce mobile 33, et donc l'élévation de la pièce fixe 32. Comme le montre la figure 4, ces mouvements de rotation et d'élévation entraînent un décalage entre l'axe B des roues et l'axe de direction 34 de la remorque, ce décalage est noté $d_f$ pour les roues avant et sera appelé entraxe par la suite. Le mécanisme d'élévation et l'entraxe sont du même type pour les roues arrières, l'entraxe est noté $d_r$

L'existence de ces entraxes $d_f$, $d_r$ peut augmenter l'encombrement lorsque l'on fait tourner le véhicule, allant à l'encontre de la précision nécessaire pour le parking.

L'invention tient compte de cette cinématique particulière d'un véhicule porte container de type élévation dont la distance d'entraxe entre l'axe de l'essieu des roues et l'axe de direction varie en fonction de la hauteur d'élévation du véhicule, plus particulièrement l'élévation des supports. Cette prise en compte de la cinématique particulière permet un suivi de trajectoire plus précis. Pour la mise en oeuvre du procédé selon l'invention un contrôleur, embarqué sur le véhicule, génère automatiquement une trajectoire à suivre par rapport à la position cible dans la station d'accueil.

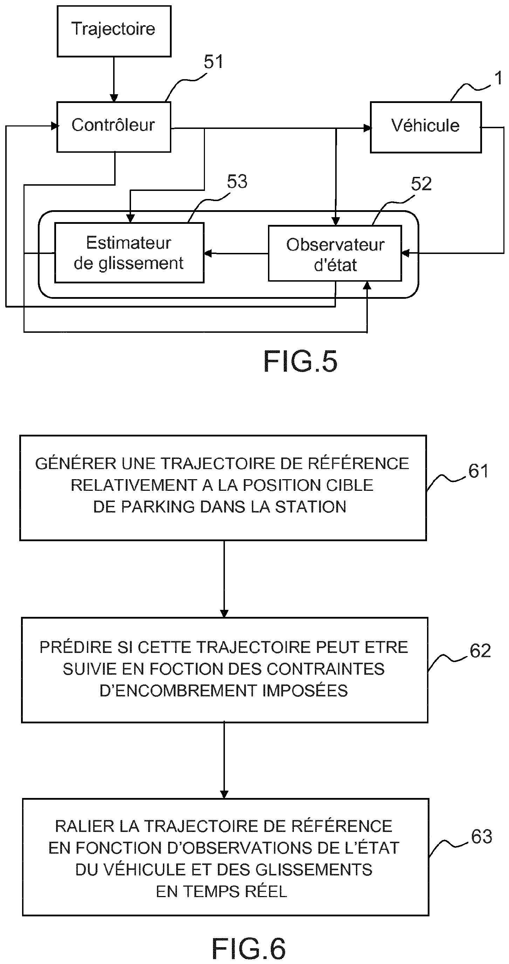

La figure 5 illustre l'architecture de contrôle de la trajectoire suivi par le véhicule. Elle comporte :

- le contrôleur 51 utilisant un modèle cinématique du véhicule 1 ;
- au moins un observateur 52 des dérives latérales et longitudinales, correspondant aux glissements, à partir d'un modèle cinématique ou dynamique 2D, permettant la correction en temps réel ou « en ligne » des erreurs dues à ces dérives ;
- un estimateur 53 estimant les glissements à partir des observations fournies par l'observateur 52.

Cette architecture, basée sur une mise à jour en temps réel, facilite les traitements des déplacements à faible vitesse sans pénaliser les traitements de déplacement à plus grande vitesse, par la correction des glissements. L'état du véhicule et les glissements sont observés à partir de ce modèle.

Un dispositif de contrôle selon l'invention incorpore le contrôleur 51, l'observateur 52 et l'estimateur 53, ces éléments étant des fonctions réalisées par un calculateur mettant ainsi en oeuvre les différentes phases du procédé selon l'invention.

Le dispositif de contrôle, fixé sur le véhicule, est relié, via des interfaces appropriées, à :

- une source d'énergie assurant son alimentation électrique ;
- un système de perception qui donne des informations de position et d'orientation par rapport à la station d'accueil, ce système étant notamment décrit dans la demande de brevet FR 1455049.
- des moteurs d'actionnement de la direction et de la traction du véhicule que le contrôleur commande en angle de braquage et en vitesse linéaire de traction ;
- des capteurs proprioceptifs du véhicule : des codeurs de mesure de l'angle des essieux de direction avant et arrière, des codeurs de mesures de la vitesse des essieux des roues avant et arrière et un capteur de distance indiquant la position verticale du véhicule, cette position étant par exemple indiquée par la mesure de distance entre un support et le sol.

La figure 6 illustre les phases du procédé selon l'invention mises en oeuvre par une architecture du type de la figure 5, ces phases étant répétées tout au long de la trajectoire de parcage.

Dans une première phase 61, on génère une trajectoire à suivre, dite de référence, en fonction de la position cible de parking du véhicule dans la station d'accueil 3.

Dans une étape suivante 62, on prédit avant le mouvement du véhicule, si cette trajectoire peut être suivie en fonction des contraintes imposées. Ces contraintes peuvent être les contraintes d'encombrement imposées par la station d'accueil ou les contraintes d'encombrement liées aux mouvements du véhicule lui-même. Si cette trajectoire de référence ne permet pas d'atteindre la position de parking cible, elle est abandonnée et le véhicule engage une manoeuvre pour s'aligner de nouveau vers la station d'accueil. Cette manoeuvre peut être pilotée à distance ou effectuée manuellement par un conducteur. On revient à la première phase 61 et une nouvelle trajectoire de référence est alors prédite.

Si la trajectoire de référence conduit bien à la position de parking cible, dans une troisième phase 63, le véhicule est piloté automatiquement pour rallier et suivre la trajectoire de référence en fonction de l'observation de l'état du véhicule et des glissements, en temps réel et selon un processus d'optimisation sous contrainte qui sera détaillé par la suite.

Les phases de vérification 62 et de suivi de trajectoire 63 sont effectuées régulièrement tout au long de la trajectoire du véhicule selon un échantillonnage de distance qui sera précisé par la suite.

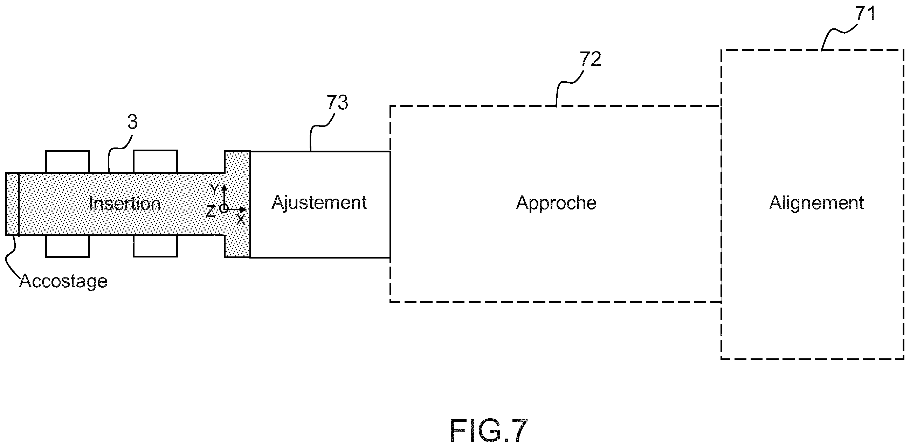

La figure 7 présente des zones géographiques 71, 72, 73 disposées devant la station d'accueil. Le véhicule doit passer par ces zones géographiques avant de s'engager dans la station. Ces zones sont caractérisées par des contraintes de plus en plus fortes, dans le processus d'optimisation sous contrainte de ralliement à la trajectoire de référence, à mesure que l'on s'approche de la station.

Une première zone 71, la plus éloignée de la station, est destinée à l'alignement du véhicule en regard de la station. Le véhicule peut être placé dans cette zone de manière non automatique, par exemple manuellement par un conducteur. La trajectoire initiale du véhicule est alignée sur l'entrée de la station. Dès cette zone 71, le contrôleur estime la position finale du véhicule dans la station en fonction de la trajectoire estimée.

Une deuxième zone 72, dite zone d'approche, suit la précédente avec des contraintes d'encombrement plus fortes sur le positionnement. En d'autres termes, dans cette zone 72 on accepte des erreurs de positionnement inférieures par rapport à la zone précédente.

Une troisième zone 73, dite zone d'ajustement, est située juste devant l'entrée de la station. Les erreurs de positionnement doivent encore être inférieures.

Tout au long du déplacement du véhicule à l'intérieur de ces zones, la position finale est estimée et le contrôleur peut donc vérifier que le véhicule sera en mesure d'atteindre sa position cible par rapport à la station sans risque de collision avec celle-ci. Pour cela, des contraintes d'encombrement sont définies en fonction de la zone où il se situe, et le contrôleur anticipe leur respect le long de la trajectoire à suivre jusqu'à la position cible. En cas d'impossibilité d'atteindre la position désirée ou de non détection de la station d'accueil 3 par le véhicule, un signal est par exemple envoyé par le contrôleur pour une modification manuelle de la position du véhicule, par un conducteur ou par un pilotage à distance.

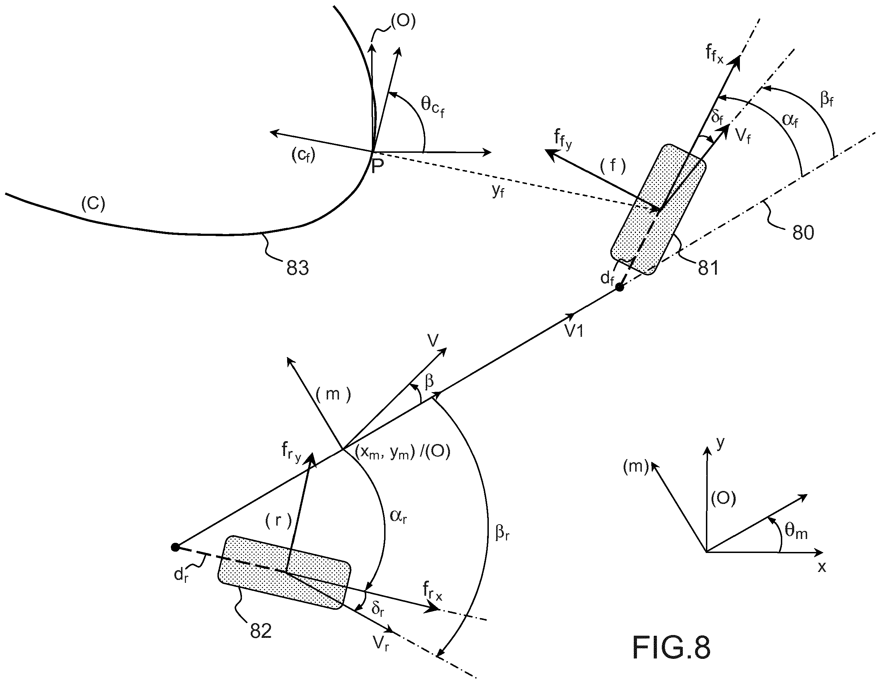

La figure 8 présente le modèle cinématique 2D du véhicule évoqué précédemment, en regard d'une trajectoire calculée 83 construite en fonction d'un modèle prédictif et de la position courante du véhicule. Il est utilisé par le contrôleur 51. C'est une extension d'un modèle décrit dans le document de A. Micaelli & C.Samson « Trajectory tracking for unicycle-type and two-steering-wheels mobile robots », Research Report RR-2097, INRIA, 1993, adapté à la figure 8. En particulier le modèle de la figure 8 prend en compte les entraxes $d_f$, $d_r$ avant et arrière entre l'axe de direction et l'axe de roues. La prise en compte de ces entraxes dans le modèle du véhicule améliore la précision du suivi de la trajectoire. Pour des raisons de simplification, une seule roue avant 81 représente l'ensemble des deux roues avant et de leur axe. De même, une seule roue arrière 82 représente l'ensemble des deux roues arrière et de leur axe. Un repère local ($f$) est lié aux roues avant et un repère local ($r$) est lié aux roues arrière. Le contrôle de la trajectoire du véhicule est opéré sur ces repères ($f$), ($r$) qui doivent relier la trajectoire de référence calculée 83. Pour des raisons de clarté, le centre du repère local ($f$) n'a pas été représenté sur la trajectoire 83, au point P courant. Il en est de même pour le repère ($r$). Les roues avant 81 ont un vecteur vitesse $V_f$ faisant un angle $\delta_f$ par rapport à l'axe de direction des roues. Cet angle $\delta_f$ représente le glissement des roues au sol. Le vecteur vitesse $V_f$ fait un angle $\beta_f$ avec l'axe 80 du véhicule, égal à l'angle de direction $\alpha_f$ corrigé de l'angle de glissement $\delta_f$. Il en est de même au niveau des roues arrières 82 respectivement pour le vecteurs vitesse $V_r$ et les angles $\delta_r$, $\beta_r$, $\alpha_r$. Les angles $\beta_f$ et $\beta_r$ expriment les angles de braquage des roues avant et arrière.

Le vecteur vitesse résultant V du véhicule fait un angle $\beta$ par rapport à l'axe 80 du véhicule. Cet angle $\beta$ exprime le glissement résultant du véhicule, en l'absence de glissement $\beta = 0$.

La direction de l'axe 80 du véhicule est repérée dans un repère absolu (o) par un angle $\theta_m$. Cet angle $\theta_m$ représente également l'angle entre le repère mobile (m) lié au véhicule et le repère absolu (o).

Le centre de la roue avant 81 fait un écart $y_f$, ou erreur latérale, avec la trajectoire de référence 83. Plus précisément, par le processus d'optimisation sous-contrainte, cet écart doit être réduit pour que le centre de la roue 81 atteigne la trajectoire en un point P où un repère local tangentiel $c_f$ fait un angle $\theta_{Cf}$ avec le repère mobile (o), cet angle $\theta_{Cf}$ étant l'angle de la trajectoire de référence au point P. De même, le centre de la roue arrière 82 doit rallier un point non représenté de la trajectoire 83.

A partir du modèle illustré par la figure 8, on peut déduire un modèle linéaire qui sera utilisé pour générer la trajectoire de référence 83 de parcage du véhicule. La linéarisation est effectuée autour du régime établi défini par :

- $\theta_m = \theta_{Cf}$ ;
- $y_f = y_r = 0$, $y_r$ étant l'écart correspondant à l'écart $y_f$ pour la roue arrière ;
- $\beta_f = \beta_r = 0$.

La linéarisation est donc effectuée autour d'un état où la roue est positionnée sur la trajectoire 83 (les erreurs latérales $y_f$, $y_r$ étant nulles) et où les glissements et angles de roue sont nuls, signifiant que la direction et l'angle de braquage sont nuls par rapport à l'axe 80 du véhicule.

$$y = \begin{bmatrix} y_f \\ y_r \\ y'_f \\ y'_r \end{bmatrix}$$

On considère le vecteur d'état $\;$ $y'_f$ et $y'_r$ étant respectivement la dérivée, par rapport à la distance curviligne, de l'erreur latérale avant $y_f$ et de l'erreur latérale arrière $y_r$

$$X = \begin{bmatrix} y_f \\ \theta_m \\ \beta_f \\ \beta_r \end{bmatrix}$$

On considère également le vecteur d'état

On peut montrer qu'il existe des matrices A, P et B conduisant au modèle linéarisé défini par les relations suivantes :

$$y = Px \qquad (1)$$

$$y' = Ax + B \begin{bmatrix} \beta'_f \\ \beta'_r \end{bmatrix} = AP^{-1} y + Bu \qquad (2)$$

y' étant la dérivée, par rapport à la distance curviligne de y, $\beta'_f$ et $\beta'_r$ étant respectivement les dérivées, par rapport à la distance curviligne, de $\beta_f$ et $\beta_r$, le vecteur d'entrée $u = \begin{bmatrix} \beta'_f \\ \beta'_r \end{bmatrix}$ exprimant ainsi l'évolution des angles de braquage des roues avant et arrière en fonction du mouvement du véhicule.

Les matrices A, P et B incorporent les équations du modèle cinématique illustré par la figure 8 tenant compte des entraxes $d_f$, $d_r$.

Pour l'observation de l'état du véhicule, on peut par exemple utiliser le vecteur :

$$X_m = \begin{bmatrix} \theta_m \\ x_m \\ y_m \end{bmatrix}$$

indiquant la position et l'orientation du véhicule par rapport au repère absolu (o), $\theta_m$ étant l'angle du repère mobile (m), lié au véhicule, par rapport au repère (o) comme indiqué précédemment, $x_m$ et $y_m$ étant les coordonnées du repère mobile (m) dans le repère (o).

Pour les observations de glissement, les vitesses et les positions des repères locaux (f) et (r) liés respectivement aux roues avant et arrière sont utilisés. La vitesse de rotation des roues sera plus particulièrement utilisée pour observer les glissements longitudinaux.

Sur la trajectoire 83, on définit un nombre $n_{step}$ de tronçons, ou pas, curvilignes de longueur S. A partir du modèle linéarisé des relations (1) et (2), les matrices d'état du système continu sont $A_c = AP^{-1}$ et $B_c = B$. En discrétisant un pas de longueur S le long de la trajectoire, les matrices du système deviennent alors $A_d$ et $B_d$ données par le système d'équations suivant (3) :

$$\begin{cases} A_d &= e^{A_c S} &= I_4 + S A_c + \frac{S}{2} A_c^2 \\ B_d &= e^{A_c S} \int_0^S e^{-A_c s} ds\, B_c &= S \left( I_4 + \frac{S}{2} A_c + \frac{S^2}{6} A_c^2 \right) B_c \end{cases}$$

$I_4$ étant la matrice identité de dimension 4 x 4. Un calcul de puissance sur $A_c$ montre que $A_c^3$ est égal à 0. Pour des considérations de déplacement en marche avant et en marche arrière, les calculs sont faits pour S > 0 et S < 0.

Les états prédits des vecteurs y sont calculés à partir de la connaissance de l'état courant $y_0$ et des matrices $A_d$ et $B_d$.

La prédiction sur les $n_{step}$ pas successifs conduit à la relation suivante (4) :

$$\begin{bmatrix} y_1 \\ y_2 \\ \vdots \\ y_k \\ \vdots \\ y_{n_{step}} \end{bmatrix} = \mathcal{A} y_0 + \mathcal{B} \begin{bmatrix} u_0 \\ u_1 \\ \vdots \\ u_{k-1} \\ \vdots \\ u_{n_{step}-1} \end{bmatrix} \qquad (4)$$

s'exprimant plus synthétiquement selon la relation suivante :

$$Y = Ay_0 + BU \qquad (5)$$

Les relations (4) et (5) montrent qu'à chaque pas de distance k, on définit une commande d'entrée $u_k$. Dans ce processus d'optimisation sous contrainte pour suivre la trajectoire 83, le critère à optimiser est par exemple une fonction quadratique du vecteur d'état prédit Y et de l'entrée de contrôle U. Ce critère, noté *crit*, s'exprime selon la relation suivante :

$$crit = \frac{1}{2}Y^t QY + \frac{1}{2}U^t \mathcal{R}U \qquad (6)$$

où $Q$ et $\mathcal{R}$ sont les matrices de poids de dimension $4n_{step}$ x $4n_{step}$ et de dimension $2\,n_{step}$ x $2\,n_{step}$ respectivement pour l'état et le contrôle du véhicule.

A partir des relations (5) et (6), on peut exprimer le critère selon la relation (7) suivante :

$$crit = \frac{1}{2}U^t \left( B^t QB + \mathcal{R} \right) U + y_0 A^t QBU \qquad (7)$$

où le paramètre dépendant de $y_0$ est exprimé séparément.

Les expressions des contraintes d'états pour un véhicule donné sont définies par la relation (8) ci-dessous. Plus particulièrement, selon une première approximation, le véhicule est modélisé comme un rectangle dont le côté avant et le côté arrière sont respectivement à une distance $D_f$ et de l'essieu avant le long de l'axe longitudinal 80. Le fait que ces côté avant et arrière restent dans une plage de tolérance $\delta_{gap}$ autour de la trajectoire peut s'exprimer selon la relation suivante :

$$-\begin{bmatrix} \delta_{gap} \\ \delta_{gap} \end{bmatrix} \leq \begin{bmatrix} 1 & -d_f + D_f & -d_f & 0 \\ 1 & -d_f - D_r & -d_f & 0 \end{bmatrix} x \leq \begin{bmatrix} \delta_{gap} \\ \delta_{gap} \end{bmatrix} \qquad (8)$$

La plage de tolérance $\delta_{gap}$ est de plus en plus contraignante en fonction des zones 71, 72, 73, 3, plus on s'approche de la position de parking visée.

Cette contrainte peut encore s'écrire sous la forme matricielle suivante :

$$Dy + d \geq 0_{4 \times 1} \qquad (9)$$

Etendue à tous les $n_{step}$ états prédits et écrit comme une fonction des futures entrées de contrôle, cette expression devient :

$$\mathcal{D}BU + \delta_{gap} + Ay_0 \geq 0_{4n_{step} \times 1} \qquad (10)$$

où :

- $\mathcal{D}$ est une matrice de $n_{step}$ blocs disposés en diagonale, chaque bloc consistant une matrice D selon la relation (9).
- $\delta_{gap} = \delta_{gap} 1_{4nstep \times 1}$.

L'obtention du vecteur d'entrée de contrôle U résulte alors de la solution au système suivant où le premier membre est relatif au critère à optimiser et le deuxième membre à la contrainte :

$$\begin{cases} \min_{U} \frac{1}{2} U^t \left( \mathcal{B}^t Q \mathcal{B} + \mathcal{R} \right) U + y_0 \mathcal{A}^t Q \mathcal{B} U \\ \mathfrak{D} \mathcal{B} U + \delta_{gap} + \mathcal{A} y_0 \geq 0_{4n_{step} \times 1} \end{cases} \tag{11}$$

Avantageusement, la loi de commande est définie indépendamment du temps et de la vitesse.

Pour passer à la loi de contrôle temps-réel des actionneurs, il faut ensuite faire intervenir le temps. Extraire

$$\begin{bmatrix} \beta'_f \\ \beta'_r \end{bmatrix} = u_{0,}$$

premier élément de la solution U, donne la loi de contrôle :

$$\begin{bmatrix} \dot{\beta}_f \\ \dot{\beta}_r \end{bmatrix} = v_f \, u_0 \tag{12}$$

$v_f$ étant la vitesse linéaire des roues avant.

On obtient ainsi un système classique d'optimisation sous contrainte.

La loi de contrôle définie par la relation (12) donne la dérivée des angles de braquage par rapport au temps, et indique donc au contrôleur les commandes de braquage à appliquer. Ces informations sont ensuite transmises via des interfaces adaptées pour impulser les mouvements aux roues.

Avantageusement, la fonction d'observation est indépendante de la trajectoire à suivre et donc non impactée par les erreurs de suivi. Elle réalise trois types d'observations. Ces observations permettent la correction des dérives latérales et longitudinales par rapport à la trajectoire de référence, en temps réel.

Un premier type d'observation effectue l'observation de l'état du véhicule défini notamment par sa position, son orientation et sa vitesse. Cet état peut être obtenu classiquement par un filtrage de Kalman étendu.

Un deuxième type d'observation effectue l'observation des glissements longitudinaux du véhicule et plus particulièrement des roues avant et arrière. De façon pratique, cette observation peut être réalisée par l'observation du rayon apparent des roues, le rayon apparent étant calculé en fonction de la distance parcourue tenant compte des glissements longitudinaux. Le rayon apparent est plus grand ou plus petit que le rayon réel des roues, sauf en l'absence de glissement où il est égal. La comparaison entre le rayon apparent et le rayon réel permet donc d'observer le glissement longitudinal.

Un troisième type d'observation effectue l'observation des glissements latéraux $\delta_f$, $\delta_r$ illustrés par la figure 5.

Pour ces différentes observations, des variables d'état proprioceptives, propres au véhicule, sont mesurées, notamment :

- les vitesses de rotation moyennes $\omega_f$ et $\omega_r$ des roues avant et arrière ;
- les angles de direction avant et arrière $\alpha_f$, $\alpha_r$ illustrés par la figure 5 ;
- les dérivées par rapport au temps $\dot{\alpha}_f$, $\dot{\alpha}_r$ de ces angles, c'est-à-dire les vitesses angulaires de direction.

Les variables extéroceptives mesurées sont notamment :

$$X_m = \begin{bmatrix} \theta_m \\ x_m \\ y_m \end{bmatrix}$$

- les composantes du vecteur $\qquad$ indiquant la position et l'orientation du véhicule par rapport au repère absolu (o) ;

La différence entre les mesures des variables proprioceptives, indiquant l'état théorique du véhicule, et les mesures des variables extéroceptives, tenant compte des glissements du véhicule, permet d'obtenir l'observation de l'état du véhicule, par exemple par un filtre de Kalman étendu.

A partir de ces observations, les glissements longitudinaux et latéraux peuvent être estimés, comme l'illustre notamment l'estimateur de glissements 53 utilisant les données d'observation 52 dans l'architecture fonctionnelle illustrée par la figure 5.

L'invention a été décrite pour un véhicule du type camion ou remorque porte containers. Elle s'applique pour tous types de véhicules nécessitant une conduite automatique vers une position cible, soumis à des glissements longitudinaux et/ou latéraux lors de leurs déplacements vers cette position cible.

**EP 3 115 280 B1**

**Revendications**

1. Procédé de conduite automatique pour l'insertion d'un véhicule dans une station d'accueil (3) et/ou d'extraction de ladite station vers une position cible, ledit véhicule étant soumis à des glissements latéraux et/ou longitudinaux des roues avant (81) et des roues arrière (82) lors de ses déplacements, **caractérisé en ce qu'**il comporte les phases suivantes :

   - une phase préliminaire dans laquelle ledit véhicule est aligné pour s'engager vers ladite position cible ;
   - une première phase (61) dans laquelle on génère une trajectoire (83) à suivre, dite de référence, en fonction de l'état du véhicule et de la position cible, ledit état étant défini par la position courante et l'orientation du véhicule ;
   - une deuxième phase (62) dans laquelle, ladite trajectoire de référence étant découpée en tronçons, on prédit au départ de chaque tronçon et avant que le véhicule engage un mouvement si ladite trajectoire de référence peut être suivie en fonction de contraintes d'encombrement imposées et des glissements latéraux et/ou longitudinaux estimés ;
   - dans une troisième phase (63), si ladite trajectoire peut être suivie, on commande l'angle de braquage desdites roues (81, 82) et la vitesse linéaire de traction du véhicule en fonction de l'état du véhicule et des glissements latéraux et/ou longitudinaux, pour rallier les centres desdites roues sur la trajectoire de référence (83) ;

   si la trajectoire ne peut être suivie, on effectue un nouvel alignement du véhicule vers la position cible et on génère une nouvelle trajectoire de référence selon la première phase (61).

2. Procédé selon la revendication 1, **caractérisé en ce qu'**on définit plusieurs zones géographiques (71, 72, 73, 3) entre la position initiale du véhicule et la position cible dans lesquelles lesdites contraintes imposées sont de plus en plus sévères en s'approchant de ladite station d'accueil.

3. Procédé selon l'une quelconque des revendications précédentes, **caractérisé en ce que** la loi de commande des angles de braquage $\beta_f$, $\beta_r$ des roues avant et arrière est obtenue selon un processus d'optimisation d'une fonction sous contrainte où la variable est un vecteur u composé des dérivés par rapport à la distance $\beta'_f$, $\beta'_r$ des angles de braquage, indépendamment du temps.

4. Procédé selon la revendication 3, **caractérisé en ce que** ladite loi de commande est basée sur un modèle cinématique dudit véhicule tenant compte de l'écart ($d_f$, $d_r$) entre l'axe des roues (B) et l'axe de direction (34) à l'avant et à l'arrière dudit véhicule.

5. Procédé selon l'une quelconque des revendications 3 ou 4, **caractérisé en ce qu'**un vecteur u est calculé pour chaque tronçon de ladite trajectoire.

6. Procédé selon l'une quelconque des revendications des revendications 3 à 5, **caractérisé en ce que** les contraintes sont fonction desdites contraintes imposées dépendant de l'encombrement dudit véhicule.

7. Procédé selon l'une quelconque des revendications précédentes, **caractérisé en ce que** l'état dudit véhicule et les glissements sont issus d'une observation (52) de variables indépendantes de ladite trajectoire, lesdites variables étant :

   - les vitesses de rotation moyennes $\omega_f$ et $\omega_r$ des roues avant et arrière ;
   - les angles de direction desdites roues avant et arrière $\alpha_f$, $\alpha_r$ ;
   - les dérivées par rapport au temps $\dot{\alpha}_f$, $\dot{\alpha}_r$ desdits angles ;
   - la position ($x_m$, $y_m$) et l'angle ($\theta_m$) d'un repère mobile (m) lié audit véhicule par rapport à un repère fixe (o).

8. Procédé selon l'une quelconque des revendications précédentes, **caractérisé en ce que** le véhicule est un porte containers, la station d'accueil étant destinée au chargement et au déchargement de containers, ledit porte container ayant des mouvements d'élévation provoquant un écart ($d_f$, $d_r$) entre l'axe des roues (B) et l'axe de direction (34) à l'avant et à l'arrière.

9. Dispositif de contrôle de la conduite automatique pour l'insertion d'un véhicule dans une station d'accueil (3) et/ou d'extraction de ladite station vers une position cible, ledit véhicule étant soumis à des glissements latéraux et/ou longitudinaux des roues avant (81) et des roues arrière (82) lors de ces déplacements, **caractérisé en ce que** ledit dispositif étant apte à être embarqué dans ledit véhicule et à être relié au moins, via des interfaces appropriées, à des capteurs proprioceptifs, des capteur extéroceptifs et des moteurs d'actionnement de la direction et de la traction dudit véhicule, il comporte un calculateur (51, 52, 53) mettant en oeuvre le procédé selon l'une quelconque des revendications précédentes.

**Patentansprüche**

1. Automatisches Führungsverfahren für das Einfahren eines Fahrzeugs in eine Aufnahmestation (3) und/oder Ausfahren aus der Station in eine Zielposition, wobei das Fahrzeug seitlichem und/oder Längsschlupf der Vorderräder (81) und der Hinterräder (82) bei seinen Bewegungen unterliegt, **dadurch gekennzeichnet, dass** es folgende Phasen beinhaltet:

   - eine vorausgehende Phase, bei welcher das Fahrzeug ausgefluchtet wird, um sich zur Zielposition zu richten;
   - eine erste Phase (61), bei welcher man eine Streckenführung erzeugt (83), welche befolgt werden soll, genannt Bezugs-Streckenführung, je nach Zustand des Fahrzeugs und der Zielposition, wobei der Zustand durch die augenblickliche Position und die Ausrichtung des Fahrzeugs definiert wird;
   - eine zweite Phase (62), bei welcher man, nachdem die Bezugs-Streckenführung in Abschnitte gegliedert wurde, zu Beginn eines jeden Abschnitts und bevor das Fahrzeug eine Bewegung beginnt, voraussagt, ob die Bezugs-Streckenführung je nach auferlegten Raumabmessungs-Erschwernissen und je nach geschätztem seitlichem und/oder Längsschlupf befolgt werden kann;
   - in einer dritten Phase (63), wenn die Streckenführung befolgt werden kann, steuert man den Einschlagwinkel der Räder (81, 82) und die lineare Zuggeschwindigkeit des Fahrzeugs je nach Zustand des Fahrzeugs und je nach seitlichem und/oder Längsschlupf, um die Mittelpunkte der Räder auf die Bezugs-Streckenführung (83) zu bringen;

   wenn die Streckenführung nicht befolgt werden kann, wird eine neue Ausfluchtung des Fahrzeugs zur Zielposition vorgenommen und eine neue Bezugs-Streckenführung gemäß der ersten Phase (61) erzeugt.

2. Verfahren nach Anspruch 1, **dadurch gekennzeichnet, dass** man mehrere geografische Zonen (71, 72, 73, 3) zwischen der Anfangsposition des Fahrzeugs und der Zielposition definiert, in welchen die auferlegten Erschwernisse je strenger sind, je mehr man sich der Aufnahmestation nähert.

3. Verfahren nach einem der vorhergehenden Ansprüche, **dadurch gekennzeichnet, dass** das Gesetz zur Steuerung der Einschlagwinkel $\beta_f$, $\beta_r$, der Vorder- und Hinterräder anhand eines Optimierungsverfahrens einer Funktion mit Erschwernissen erzielt wird, wobei die Variable ein Vektor u ist, bestehend aus den Ableitungen in Bezug auf die Distanz $\beta'_f$, $\beta'_r$ der Einschlagwinkel, unabhängig von der Zeit.

4. Verfahren nach Anspruch 3, **dadurch gekennzeichnet, dass** das Gesetz der Steuerung auf einem kinematischen Modell des Fahrzeugs basiert, welches den Abstand ($d_f$, $d$) zwischen der Achse der Räder (B) und der Lenkachse (34) vorn und hinten am Fahrzeug berücksichtigt.

5. Verfahren nach einem der Ansprüche 3 oder 4, **dadurch gekennzeichnet, dass** ein Vektor u für jeden Abschnitt der Streckenführung berechnet wird.

6. Verfahren nach einem der Ansprüche 3 bis 5, **dadurch gekennzeichnet, dass** die Erschwernisse von den auferlegten Erschwernissen abhängen, welche von den Raumabmessungen des Fahrzeugs abhängen.

7. Verfahren nach einem der vorhergehenden Ansprüche, **dadurch gekennzeichnet, dass** der Zustand des Fahrzeugs und die Schlupfe aus einer Beobachtung (52) von Variablen hervorgehen, welche von der Streckenführung unabhängig sind, wobei die Variablen folgendermaßen lauten:

   - die mittleren Drehzahlen ωf und ωr der Vorder- und Hinterräder;
   - die Lenkwinkel αf, αr der Vorder- und Hinterräder;
   - die zeitabhängigen Ableitungen $\dot{\alpha}_f$, $\dot{\alpha}_r$ der Winkel;
   - die Position (xm, $y_m$) und der Winkel ($\theta_m$) eines beweglichen, mit dem Fahrzeug verbundenen Bezugspunktes (m) in Bezug auf einen festen Bezugspunkt (o).

8. Verfahren nach einem der vorhergehenden Ansprüche, **dadurch gekennzeichnet, dass** das Fahrzeug ein Containerfahrzeug ist, wobei die Aufnahmestation zum Be- und Entladen von Containern dient, das Containerfahrzeug Hubbewegungen aufweist, welche einen Abstand t ($d_f$, $d_r$) zwischen der Achse der Räder (B) und der Lenkachse (34) vorn und hinten bewirken.

9. Steuerungsvorrichtung für das automatische Führen für das Einfahren eines Fahrzeugs in eine Aufnahmestation (3) und/oder Ausfahren aus der Station in eine Zielposition, wobei das Fahrzeug seitlichem und/oder Längsschlupf der Vorderräder (81) und der Hinterräder (82) bei diesen Bewegungen unterliegt, **dadurch gekennzeichnet, dass** die Vorrichtung, welche geeignet ist, an Bord des Fahrzeug mitgeführt zu werden und mindestens über geeignete Schnittstellen mit propriozeptiven Sensoren, mit exterozeptiven Sensoren und mit Betätigungsmotoren für Lenkung und Zugantrieb des Fahrzeugs verbunden zu werden, einen Rechner (51, 52, 53) umfasst, welcher das Verfahren nach einem der vorhergehenden Ansprüche umsetzt.

**Claims**

1. Automatic control method for insertion of a vehicle into a receiving station (3) and/or extraction from said station to a target position, said vehicle being subject to lateral and/or longitudinal slipping of the front wheels (81) and the rear wheels (82) during its movements, **characterized in that** it includes the following phases:

   - a preliminary phase in which said vehicle is aligned to be engaged toward said target position;
   - a first phase (61) in which a trajectory (83) to be followed, called the reference trajectory, is generated as a function of the status of the vehicle an of the target position, said status being defined by the current position and the orientation of the vehicle;
   - a second phase (62) in which, said reference trajectory being divided into sections, at the start of each section and before the vehicle begins a movement whether said reference trajectory can be followed is predicted as a function of imposed overall size constraints and estimated lateral and/or longitudinal slippages;
   - in a third phase (63), if said trajectory can be followed, the turn angle of said wheels (81, 82) and the linear traction speed of the vehicle are controlled as a function of the status of the vehicle and its lateral and/or longitudinal slippages, to bring the centres of said wheels onto the reference trajectory (83);

   if the trajectory cannot be followed, a new alignment of the vehicle toward the target position is effected and a new reference trajectory is generated in accordance with the first phase (61).

2. Method according to Claim 1, **characterized in that** a plurality of geographical zones (71, 72, 73, 3) is defined between the initial position of the vehicle and the target position in which said imposed constraints are increasingly severe as said receiving station is approached.

3. Method according to either one of the preceding claims, **characterized in that** the control law for the steering angles $\beta_f$, $\beta_r$ of the front and rear wheels is obtained by a process of constrained optimization of a function in which the variable is a vector u composed of the time-independent derivatives $\beta'_f$, $\beta'_r$ with respect to distance of the turn angles.

4. Method according to Claim 3, **characterized in that** said control law is based on a kinematic model of said vehicle taking account of the distance ($d_f$, $d_r$) between the axis of the wheels (B) and the steering axis (34) at the front and at the rear of said vehicle.

5. Method according to either one of Claims 3 or 4, **characterized in that** a vector u is calculated for each section of said trajectory.

6. Method according to any one of Claims 3 to 5, **characterized in that** the constraints are a function of said imposed constraints depending on the overall size of said vehicle.

7. Method according to any one of the preceding claims, **characterized in that** the status of said vehicle and the slippages are obtained by observation (52) of variables independent of said trajectory, said variables being:

   - the average rotation speeds $\omega_f$ and $\omega_r$ of the front and rear wheels;
   - the steering angles of said front and rear wheels $\alpha_f$, $\alpha_r$;
   - the derivatives with respect to time $\dot{\alpha}_f$, $\dot{\alpha}_r$ of said angles;
   - the position ($x_m$, $y_m$) and the angle ($\theta_m$) of a mobile frame of reference (m) linked to said vehicle with respect to a fixed frame of reference (o).

8. Method according to any one of the preceding claims, **characterized in that** the vehicle is a container transporter, the receiving station being intended for loading and unloading containers, said container transporter having elevation movements producing a distance ($d_f$, $d_r$) between the axis of the wheels (B) and the steering axis (34) at the front and at the rear.

9. Control device for the automatic control of the insertion of a vehicle into a receiving station (3) and/or extraction from said station to a target position, said vehicle being subject to lateral and/or longitudinal slipping of the front wheels (81) and the rear wheels (82) during these movements, **characterized in that** said device being adapted to be on board said vehicle and to be connected via appropriate interfaces at least to proprioceptive sensors, exteroceptive sensors and steering and traction motors of said vehicle, it includes a computer (51, 52, 53) implementing the method according to any one of the preceding claims.

FIG.1a

FIG.1b

FIG.2a

FIG.2b

EP 3 115 280 B1

FIG.3

EP 3 115 280 B1

FIG.4

EP 3 115 280 B1

Trajectoire

51

Contrôleur

Véhicule

1

53

52

Estimateur
de glissement

Observateur
d'état

## FIG.5

GÉNÉRER UNE TRAJECTOIRE DE RÉFÉRENCE
RELATIVEMENT A LA POSITION CIBLE
DE PARKING DANS LA STATION

61

PRÉDIRE SI CETTE TRAJECTOIRE PEUT ETRE
SUIVIE EN FOCTION DES CONTRAINTES
D'ENCOMBREMENT IMPOSÉES

62

RALIER LA TRAJECTOIRE DE RÉFÉRENCE
EN FONCTION D'OBSERVATIONS DE L'ÉTAT
DU VÉHICULE ET DES GLISSEMENTS
EN TEMPS RÉEL

63

## FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2352690 B1
- US 8862321 B2
- DE 102012023999 A1
- US 20060111820 A1
- FR 1455049